Europäisches Patentamt

(19) European Patent Office

Office européen des brevets

(11) Numéro de publication : **0 002 642**
**B1**

(12) **FASCICULE DE BREVET EUROPÉEN**

---

(45) Date de publication du fascicule du brevet :
09.06.82

(21) Numéro de dépôt : **78400230.5**

(22) Date de dépôt : **12.12.78**

(51) Int. Cl.³ : **G 10 K 11/26**, **H 01 Q 21/00**,
**G 01 S 15/06**

---

(54) **Système d'antenne à pouvoir séparateur élevé.**

---

(30) Priorité : **16.12.77 FR 7738092**

(43) Date de publication de la demande :
**27.06.79 (Bulletin 79/13)**

(45) Mention de la délivrance du brevet :
**09.06.82 Bulletin 82/23**

(84) Etats contractants désignés :
**DE GB IT NL SE**

(56) Documents cités :
**DE - A - 2 511 709**
**FR - A - 2 064 400**

(73) Titulaire : **THOMSON-CSF**
**173, Boulevard Haussmann**
**F-75360 Paris Cedex 08 (FR)**

(72) Inventeur : **Grail, Georges**
**"THOMSON-CSF" SCPI 173, bld Haussmann**
**F-75360 Paris Cedex 08 (FR)**

(74) Mandataire : **Eisenbeth, Jacques Pierre et al**
**THOMSON-CSF SCPI 173, Bld Haussmann**
**F-75360 Paris Cedex 08 (FR)**

---

Imprimerie Jouve, 18, rue St-Denis, 75001 Paris, France

## Système d'antenne à pouvoir séparateur élevé

La présente invention a pour objet un système d'antennes à pouvoir séparateur élevé.

L'invention s'applique plus particulièrement à la détection de cibles dans un système plus particulièrement à la détection de cibles dans un système de détection d'ondes, notamment sonar dans lequel des ondes sont émises et reçues après réflexion sur la ou les cibles par des antennes d'émission et de réception non identiques.

Dans un tel système on recherche plus particulièrement à obtenir un pouvoir séparateur angulaire, c'est-à-dire l'aptitude du système d'antennes à distinguer deux cibles proches, qui soit maximal compte tenu de la dimension des antennes d'émission et de réception.

Des systèmes d'antennes sont connus pour lesquels on a recherché un tel pouvoir séparateur.

Il est ainsi connu d'associer une antenne d'émission pratiquement omnidirectionnelle, à une antenne de réception, composée de transducteurs placés côte à côte le long d'une ligne de longueur totale L. Une telle antenne de réception est dite pleine.

Il est connu également d'associer une antenne pleine à l'émission avec une antenne pleine à la réception. Dans ce cas une antenne unique peut grâce à la réversibilité des transducteurs jouer à la fois le rôle d'antenne d'émission et de réception.

Le pouvoir séparateur d'un dispositif à antennes d'émission et de réception pleines est connu, si l'amplitude et la phase sont constantes pour tous les transducteurs. Il en est de même si l'amplitude est constante et la phase augmente d'une valeur constante d'un transducteur à l'autre.

On propose d'augmenter le pouvoir séparateur obtenu pour une antenne ayant une amplitude et une phase constantes, grâce à une certaine répartition d'amplitude et de phase le long de l'antenne. Une telle antenne dite superdirective est discutée dans un article de « L'Onde Electrique » 32, (1952), page 32. Il est montré dans cet article qu'un tel dispositif nécessite d'importants moyens et que les résultats sont peu satisfaisants.

On a proposé également un autre moyen pour obtenir un pouvoir séparateur élevé, en utilisant des antennes multiplicatives. Un tel dispositif présente le désavantage que le pouvoir séparateur dépend des caractéristiques de la cible à détecter.

Dans le document FR-A-2 064 400, on a proposé un moyen pour obtenir un pouvoir séparateur élevé. Le principe consiste à utiliser à l'émission une antenne composée de transducteurs uniformément répartis et à la réception une antenne ne comportant que deux transducteurs d'extrémité.

Les deux antennes ayant sensiblement la même longueur.

En additionnant les signaux délivrés par ces transducteurs d'extrémité on obtient un diagramme de rayonnement de type consinusoïdal qui vient en facteur multiplicateur du diagramme de rayonnement de l'antenne d'émission pleine.

Par ailleurs, il est connu, notamment par le document FR-A-2 441 078 de préformer à la réception d'une antenne pleine, des voies angulaires, par application des signaux détectés par les transducteurs à des déphaseurs à prises multiples. Les différentes voies étant obtenues par sommation de signaux déphasés.

La présente invention présente l'avantage par rapport au système décrit dans le document FR-A-2 064 400 cité de permettre de préformer des voies angulaires de réception, tout en présentant l'avantage procuré par l'association d'une antenne pleine et d'une antenne interférométrique. Il est possible ainsi de surveiller tout un secteur angulaire avec un bon pouvoir séparateur.

Brièvement c'est un système d'antennes pour la détection d'ondes, notamment sonar, à pouvoir séparateur élevé comprenant une antenne d'émission et une antenne de réception, les deux antennes ayant une longueur sensiblement égale de valeur L, l'une composée de transducteurs répartis sur la longueur et l'autre composée d'au moins deux transducteurs d'extrémité, ayant un diagramme de rayonnement dont les lobes forment une distribution angulaire régulière, caractérisé par le fait que l'antenne d'émission est celle qui comporte des transducteurs d'extrémité, et l'antenne de réception est celle qui comporte des transducteurs répartis, et que ces transducteurs répartis sont reliés à des moyens déphaseurs à prises multiples et coopérant avec des moyens sommateurs pour constituer un ensemble de voies de détection préformées, les lobes principaux des voies de détection préformées recouvrant un par un lesdits lobes d'émission afin que l'ensemble émission-réception ait un diagramme global à pouvoir séparateur renforcé pour chacune desdites voies préformées.

Suivant une caractéristique préférentielle de l'invention, l'antenne de réception est à voies préformées et centrées sur les maximums de l'antenne d'émission.

Ce système présente un avantage par rapport à l'art antérieur non seulement par l'augmentation du pouvoir séparateur, mais également par une augmentation de la portée pour une même puissance d'émission.

D'autres caractéristiques et avantages ressortiront de la description d'exemples de réalisation, illustrés par les figures qui représentent :

la figure 1, les diagrammes cartésiens d'une antenne d'émission omnidirectionnelle et d'une antenne de réception pleine, ainsi que le diagramme global émission-réception ;

la figure 2, les diagrammes cartésiens d'une antenne d'émission pleine et d'une antenne de réception pleine ainsi que le diagramme global émission-réception ;

la figure 3, les diagrammes cartésiens d'une antenne d'émission composée de deux transducteurs de dimensions négligeables émettant en synchronisme, d'une antenne de réception pleine ainsi que le diagramme global émission-réception ;

la figure 4, les diagrammes cartésiens d'une antenne d'émission composée de deux transducteurs de dimension non négligeable émettant en synchronisme d'une antenne de réception pleine, ainsi que le diagramme global émission-réception ;

la figure 5, les diagrammes cartésiens d'une antenne d'émission composée de deux transducteurs émettant en synchronisme et de l'antenne de réception à voies préformées ;

la figure 6, les diagrammes cartésiens d'une antenne d'émission composée de deux transducteurs émettant en synchronisme, d'une voie de réception centrée sur un maximum d'émission ainsi que le diagramme global émission-réception ;

la figure 7, les diagrammes cartésiens d'une antenne d'émission composée de deux transducteurs émettant en opposition de phase, d'une voie de réception centrée sur un maximum d'émission ainsi que le diagramme global émission-réception ;

les figures 8 et 9, deux exemples de réalisation comportant le dispositif émission-réception avec la formation de voies, suivant l'invention.

Le pouvoir séparateur d'un système de détection tel qu'un radar ou un sonar dépend à la fois du diagramme de l'antenne d'émission $E(\theta)$ et du diagramme de l'antenne de réception $R(\theta)$, où $\theta$ est l'angle d'une direction d'observation avec un axe lié aux antennes.

Le signal reçu par l'antenne de réception est proportionnel à $S(\theta)$, avec :

$$S(\theta) = E(\theta) \times R(\theta)$$

Il est connu que l'on peut calculer pour une antenne aussi bien le diagramme d'émission que le diagramme de réception par une transformation de Fourier, à partir de la répartition en amplitude sur l'antenne. Dans le cadre de la présente invention, on s'intéresse plus spécialement à des antennes de longueur L et de hauteur négligeable devant L. Si $a(x)$ est la répartition d'amplitude le long de cette antenne, on trouve les diagrammes $A(\theta)$ à partir de la relation :

$$A(\theta) = \int_{-\frac{L}{2}}^{+\frac{L}{2}} a(x) \exp\left(j \frac{2\pi}{\lambda} \sin\theta\right) dx \qquad (1)$$

$\lambda$ est la longueur d'onde dans le milieu de propagation et $j = \sqrt{-1}$.

Si l'amplitude est constante, ce qui est souvent le cas pour une antenne dite pleine, $A(\theta)$ est trouvé à partir de (1) à une constante multiplicative près :

$$A(\theta) = \sin\left(\frac{\pi L \sin\theta}{\lambda}\right) \Big/ \left(\frac{\pi L \sin\theta}{\lambda}\right). \qquad (2)$$

On trouve ainsi que la largeur angulaire $2\theta_0$ à 3dB des diagrammes est telle que :

$$2\theta_0 = 0{,}88 \; \lambda/L \qquad (3)$$

Pour trouver (3) on a remplacé $\sin\theta$ par $\theta$, cette approximation est pratiquement valable et sera constamment utilisée par la suite pour faciliter l'exposé.

L'antenne d'émission suivant l'invention comporte préférentiellement deux transducteurs placés aux deux extrémités de l'antenne.

Une telle antenne sera appelée par la suite antenne interférométrique.

Si $l$ est la longueur le long de l'antenne de chacun des transducteurs et si les deux transducteurs émettent en synchronisme, le diagramme d'émission $E(\theta)$ sera donné par :

$$E(\theta) = \cos\left(\frac{\pi L \sin\theta}{\lambda}\right) \times t \qquad (4)$$

avec

$$t = \sin\left(\frac{\pi l \sin\theta}{\lambda}\right) \Big/ \left(\frac{\pi l \sin\theta}{\lambda}\right) \qquad (5)$$

Si les deux transducteurs émettent en opposition de phase on trouve pour $E(\theta)$ :

$$E(\theta) = \sin\left(\frac{\pi L \sin \theta}{\lambda}\right) \times t \, . \qquad (6)$$

Si $l$ est petit devant $\lambda$, $t$ sera pratiquement égal à 1.

Pour montrer l'avantage du montage de l'antenne interférométrique en émission, on compare ce montage à ceux de l'art antérieur.

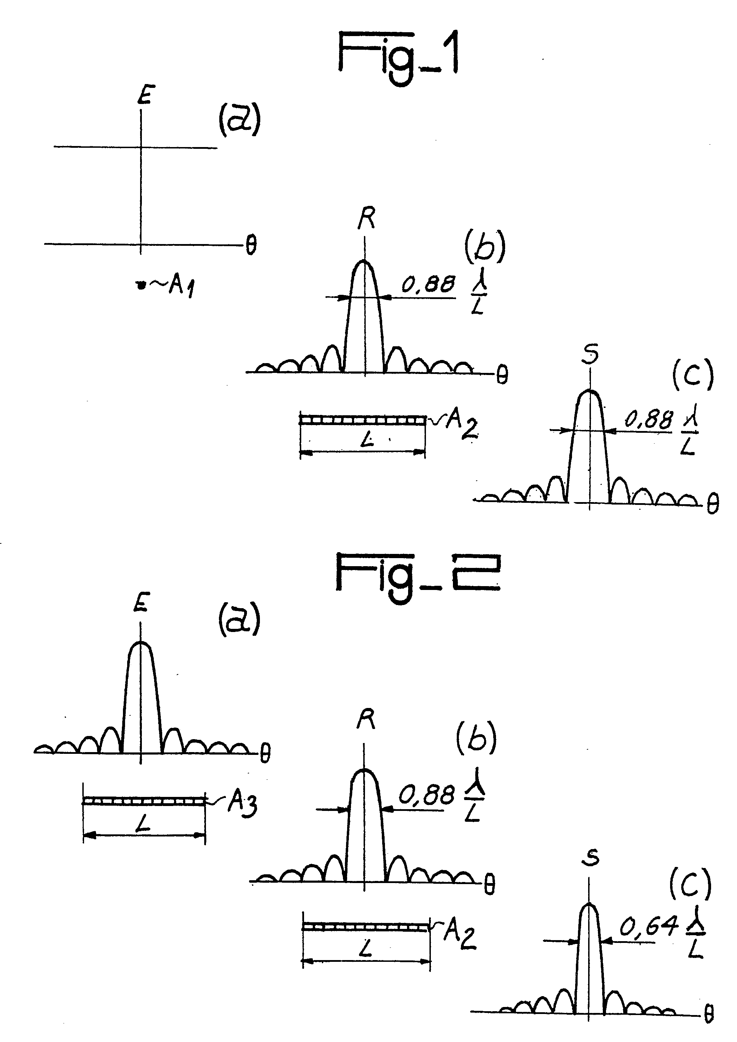

Sur la figure 1, on a considéré une antenne d'émission $A_1$ composée d'un transducteur de dimension faible devant la longueur d'onde.

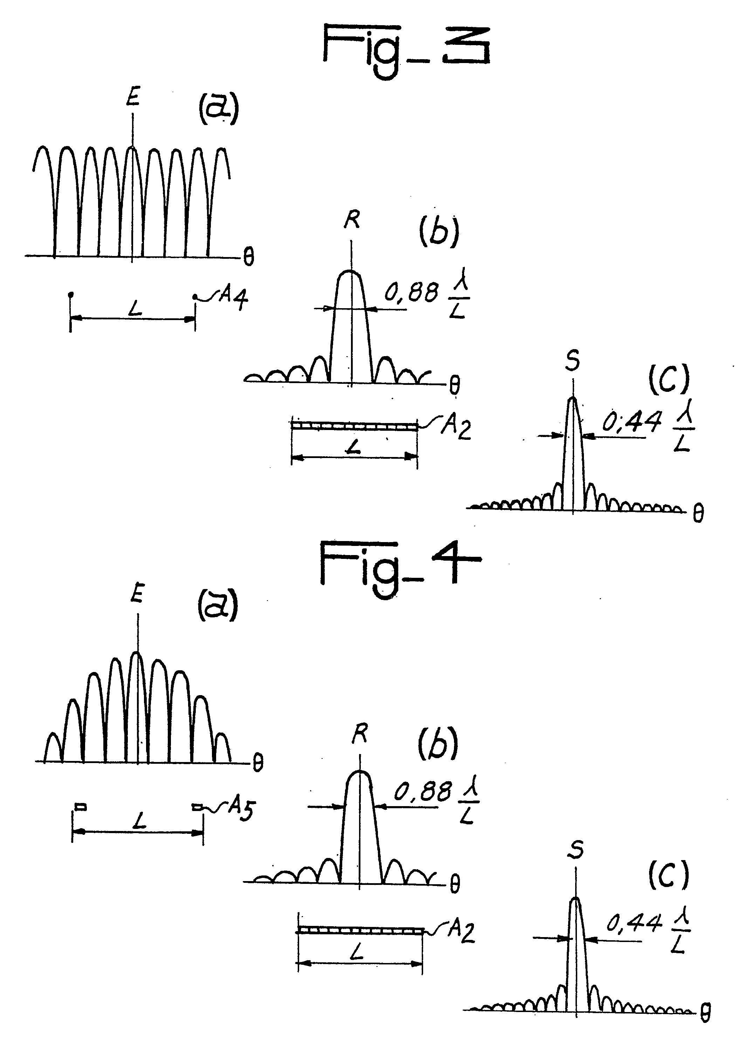

C'est ainsi que l'on obtient un diagramme $E(\theta)$ omnidirectionnel comme le montre la figure 1a. A cette antenne d'émission on associe une antenne pleine $A_2$ où $R(\theta)$ est donné par la relation (2), (fig. 1b). On trouve que $S(\theta)$ est également donné par la relation (2), (fig. 1c). $S(\theta)$ a dans ce cas une largeur angulaire à 3dB de 0,88 $\lambda/L$. Un autre exemple est montré par la figure 2. L'antenne d'émission $A_3$ (fig. 2a) et l'antenne de réception $A_2$ (fig. 2b) sont pleines. $E(\theta)$ et $R(\theta)$ sont donnés par la relation (2) et $S(\theta)$ est donc donné par :

$$S(\theta) = E(\theta) \times R(\theta) = \sin^2\left(\frac{\pi L \sin \theta}{\lambda}\right) \bigg/ \left(\frac{\pi L \sin \theta}{\lambda}\right)^2$$

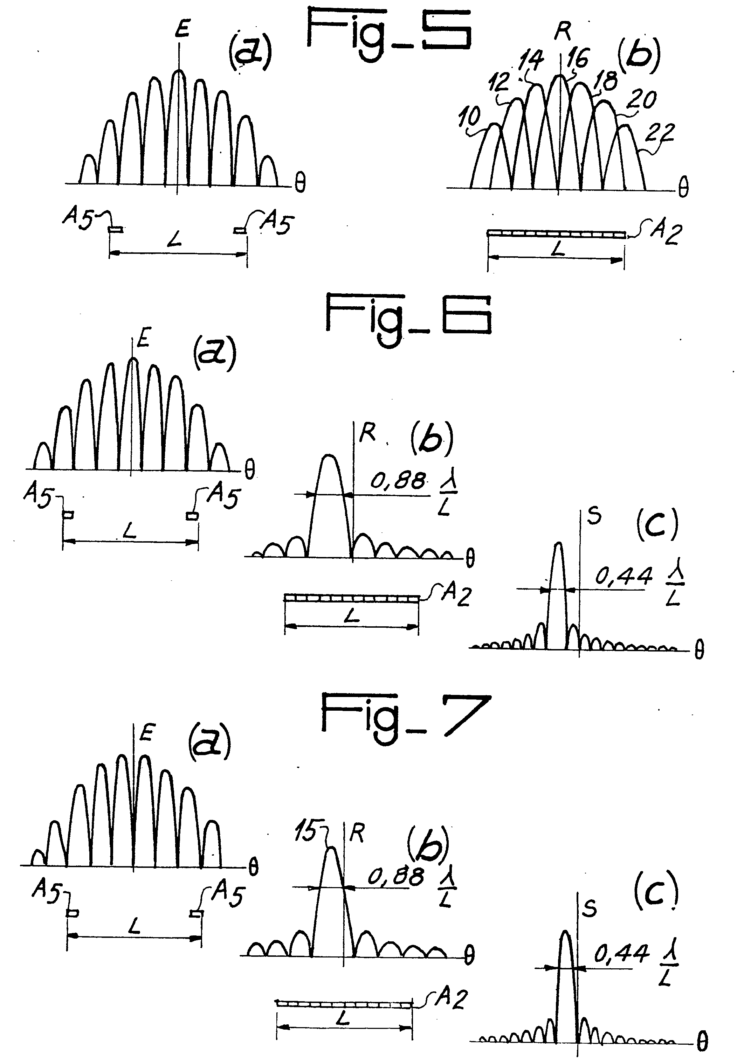

$S(\theta)$ est représenté sur la figure 4c, la largeur angulaire à 3dB de ce diagramme est 0,64 $\lambda/L$.

Les figures 3 et 4 montrent l'avantage de l'antenne interférométrique à l'émission. Pour des dimensions des transducteurs $A_4$, (fig. 3a)) négligeables devant la longueur d'onde, $E(\theta)$ est donné par la relation (4) et avec $t = 1$. On a supposé que les deux transducteurs sont synchrones. L'antenne de réception $A_2$ (fig. 3b) est pleine et $R(\theta)$ est donné par la relation (2).

On trouve alors pour $S(\theta)$ :

$$S(\theta) = \sin\left(\frac{2\,\pi L \sin \theta}{\lambda}\right) \bigg/ \left(\frac{2\,\pi L \sin \theta}{\lambda}\right)$$

et la largeur de $S(\theta)$ à 3dB est 0,44 $\lambda/L$.

Sur la figure 4 on a considéré le cas de transducteurs $A_5$, (fig. 4a) de dimensions non négligeables par rapport à la longueur d'onde.

L'antenne de réception $A_2$ pleine avec $R(\theta)$ sont représentés sur la figure 4b et finalement $S(\theta)$, (fig. 4c) est donné par :

$$S(\theta) = t \times \sin\left(\frac{2\,\pi L \sin \theta}{\lambda}\right) \bigg/ \left(\frac{2\,\pi L \sin \theta}{\lambda}\right)$$

la largeur à 3dB est pratiquement égal à 0,44 $\lambda/L$, par contre les lobes secondaires sont abaissés par rapport au diagramme de la figure 3a.

Pour la détection par sonar il est connu que l'on peut préformer des voies, cette méthode est décrite notamment dans le document FR-A-2 241 078.

Brièvement, ces voies préformées sont obtenues par application des signaux électriques des transducteurs formant l'antenne, à des déphaseurs à prises multiples, suivis de sommateurs. Pour une voie autour de la direction moyenne d'angle $\theta_0$, les déphasages entre transducteurs pour une onde provenant de cette direction sont compensés.

Pour la réalisation suivant l'invention, la direction moyenne des voies coïncide avec les maximums de l'émission de l'antenne interférométrique.

Le diagramme de réception $R(\theta)$ pour une voie préformée centrée autour de $\theta_0$ est donné par la relation :

$$R(\theta) = \frac{\left(\sin\,\frac{\pi L}{\lambda}\,(\sin \theta - \sin \theta_0)\right)}{\frac{\pi L}{\lambda}\,(\sin \theta - \sin \theta_0)} \times \frac{\left(\sin\,\frac{\pi b}{\lambda}\,\sin \theta\right)}{\frac{\pi b}{\lambda}\,\sin \theta}$$

où $b$ est la longueur occupée sur l'antenne par un transducteur.

4

## 0 002 642

Soit alors une antenne interférométrique $A_5$ (fig. 5a) avec son diagramme $E(\theta)$ les deux sources étant synchrones. On détermine alors des voies préformées 10, 12, 14, 16, 18, 20 et 22 de l'antenne pleine $A_2$, (fig. 5b).

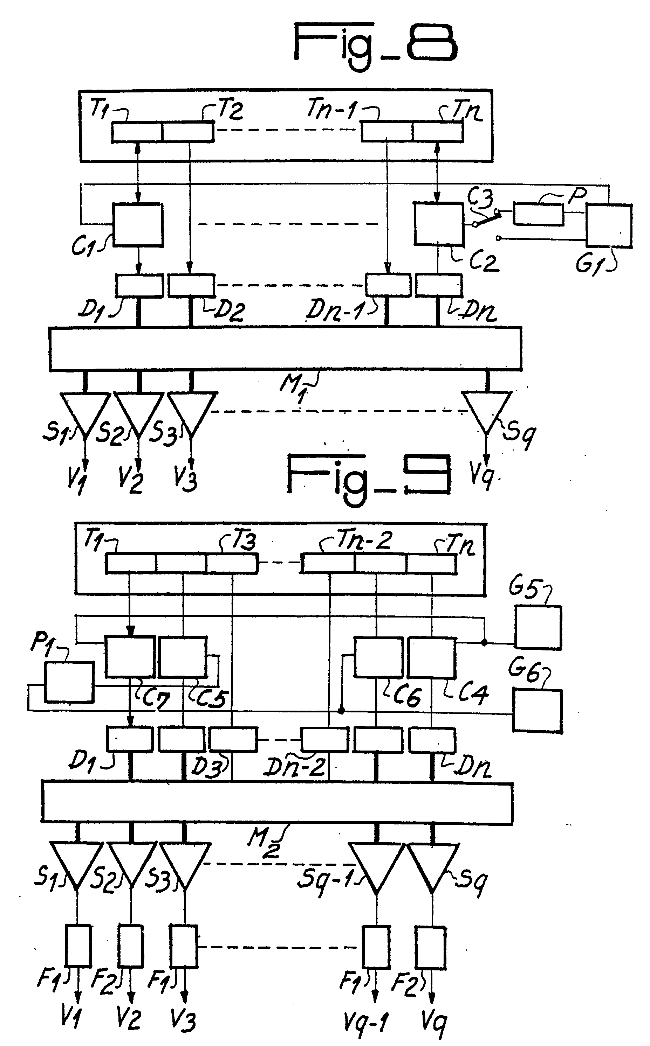

La figure 6a, représente une antenne interférométrique avec son diagramme $E(\theta)$ et le diagramme de réception d'une voie particulière (fig. 6b) centrée sur un maximum de $E(\theta)$. Le diagramme global $S(\theta)$ est représenté (fig. 6c) avec sa largeur à 3dB qui est 0,44 $\lambda/L$. Etant donné que $E(\theta)$ s'annule périodiquement, il existe des directions pour lesquelles, il n'y a pas de détection. Pour y remédier, on alimente les transducteurs également en opposition de phase. $E(\theta)$ est alors donné par la relation (6), (fig. 7a) et l'on intercale des voies préformées centrées sur ces nouveaux maximums. Une telle voie 15 est montrée par la figure 7b ainsi que le diagramme global de cette voie $S(\theta)$, la largeur angulaire à 3dB est égale à 0,44 $\lambda/L$.

Sur la figure 8 on a représenté un exemple de montage suivant l'invention. L'antenne émission-réception est formée par les transducteurs $T_1$, $T_2$, ..., $T_n$. Seuls les transducteurs $T_1$ et $T_n$ sont utilisés pour l'émission, et $T_1$, $T_2$, ..., $T_n$ sont reliés aux déphaseurs à prises multiples $D_1$, $D_2$, ..., $D_n$. $M_1$ représente une matrice de câblage reliant les sorties des déphaseurs aux sommateurs $S_1$, $S_2$, ..., $S_q$.

Des commutateurs $C_1$ et $C_2$ permettent de passer de l'émission à la réception et réciproquement. Les signaux électriques d'émission sont fournis par un générateur d'impulsions à la fréquence choisie $G_1$ qui est relié à $C_2$ par intermédiaire d'un commutateur $C_3$ et d'un déphaseur de $\pi$, P. Les impulsions fournies par $G_1$ passent vers $C_1$ alternativement de façon directe ou par P. Le commutateur $C_1$ est relié directement à $G_1$.

Ce montage permet donc d'obtenir une antenne interférométrique avec les deux transducteurs alternativement en phase et en opposition de phase.

Une séquence correspond aux voies $V_1$, $V_3$, ... et l'autre à $V_2$, $V_4$, ...

Un autre exemple de réalisation est montré sur la figure 9.

L'antenne est composée encore par les transducteurs $T_1$, $T_2$, ..., $T_n$ reliés aux déphaseurs à prises multiples $D_1$, $D_2$, ..., $D_n$. Les sorties des déphaseurs sont reliées par une matrice de câblage $M_2$ aux sommateurs $S_1$, $S_2$, ..., $S_q$.

L'émission se fait simultanément aux fréquences $F_1$ et $F_2$. A la fréquence $F_1$, avec $F_1 < F_2$, seuls les transducteurs $T_1$ et $T_n$ distants de $L_1$ émettent. Par contre à la fréquence $F_2$ c'est un autre couple de transducteurs distants de $L_2$ qui émettent où $L_1$ et $L_2$ sont reliés par la relation :

$$L_2 = L_1 F_1/F_2 \qquad\qquad (7)$$

Cette condition donnée par la relation (7) est nécessaire pour compenser la variation du diagramme avec la fréquence.

Le générateur d'impulsions à la fréquence $F_1$, $G_5$, est relié aux transducteurs $T_1$ et $T_2$ par l'intermédiaire des commutateurs $C_4$ et $C_7$.

Un générateur d'impulsions à la fréquence $F_2$ est relié à un autre couple de transducteurs (sur la figure on a pris $T_2$ et $T_{n-1}$), par intermédiaire des commutateurs $C_5$ et $C_6$ et du déphaseur de $\pi$, $P_1$.

On obtient ainsi une antenne interférométrique pour laquelle l'émission des deux transducteurs est synchrone pour la fréquence $F_1$ et en opposition de phase pour la fréquence $F_2$.

On place à la sortie des sommateurs $S_1$, $S_3$, $S_5$, ... un filtre centré sur $F_1$ et à la sortie des sommateurs $S_2$, $S_4$, $S_6$, ... un filtre centré sur $F_2$. A la sortie des filtres on obtient les voies $V_1$, $V_2$, ..., $V_n$.

Les diagrammes figurant sur les figures 6, 7 et 8 correspondent à un sonar haute fréquence d'imagerie sous-marine couvrant un secteur de 28°.

Ses caractéristiques sont les suivantes :
— fréquence de fonctionnement : autour de 200 kHz ;
— nombre de voies préformées : 200 ;
— largeur à mi-puissance des voies : 0°, 14 ;
— émission : couverture complète par deux émissions séquentielles à la même fréquence ;
— encombrement des antennes acoustiques : 200 $\lambda$ ;
— longueur des transducteurs : 2 $\lambda$.

On choisit préférentiellement une longueur de 2 $\lambda$ pour les transducteurs pour ne couvrir que les 28° du secteur angulaire et pour obtenir une surface d'émission suffisante.

Les fréquences choisies dans un exemple de réalisation correspondant à la figure 9, sont : $F_1 = 190$ kHz et $F_2 = 210$ kHz.

Un avantage de l'utilisation de deux transducteurs pour l'émission du type interférométrique, par rapport à celle d'une seule source, est de pouvoir émettre à densité de puissance égale, une amplitude deux fois plus importante dans le milieu de rayonnement, c'est-à-dire une puissance apparente 4 fois supérieure (on dit que dans ce cas le gain en puissance de l'antenne est de 2 soit + 3dB.

Un autre avantage existe également dans la situation réciproque de celle qui vient d'être décrite : on désire conserver dans le milieu de rayonnement ; par l'utilisation selon l'invention de deux sources interférométriques, une puissance apparente identique à celle obtenue avec une seule source ; on pourra alors diviser par deux l'amplitude de chacune de ces sources et donc par quatre la puissance qu'on leur applique.

5

**Revendications**

1. Système d'antennes pour la détection d'ondes, notamment sonar, à pouvoir séparateur élevé comprenant une antenne d'émission et une antenne de réception, les deux antennes ayant une longueur sensiblement égale de valeur L, l'une composée de transducteurs répartis sur la longueur et l'autre composée d'au moins deux transducteurs d'extrémité, ayant un diagramme de rayonnement dont les lobes forment une distribution angulaire régulière, caractérisé par le fait que l'antenne d'émission est celle qui comporte des transducteurs d'extrémité $(T_1, T_n)$, l'antenne de réception est celle qui comporte des transducteurs répartis $(T_1, T_2, ..., T_n)$ et que ces transducteurs répartis sont reliés à des moyens déphaseurs $(D_1, D_2, ..., D_n)$ à prises multiples et coopérant avec des moyens sommateurs $(S_1, S_2, ..., S_n)$ pour constituer un ensemble de voies de détection préformées $(V_1, V_2, ..., V_q)$, les lobes principaux (R) des voies de détection préformées $(V_1, V_2, ..., V_q)$ recouvrant un par un lesdits lobes d'émission (E) afin que l'ensemble émission-réception ait un diagramme global (C) à pouvoir séparateur renforcé pour chacune desdites voies préformées.

2. Système d'antennes suivant la revendication 1, caractérisé en ce que les deux transducteurs de l'antenne d'émission $(T_1, T_2)$ sont alimentés alternativement en concordance de phase et en opposition de phase afin que les lobes d'émission (E) forment deux distributions périodiques en quadrature assurant une couverture angulaire complète du secteur d'émission.

3. Système d'antennes suivant la revendication 1, caractérisé en ce que l'antenne d'émission comporte un premier couple de transducteurs $(T_1, T_2)$ d'espacement $L_1$, reliés à un générateur d'impulsions $(G_5)$ à la fréquence $F_1$, les deux transducteurs étant alimentés, en phase et un deuxième couple de transducteurs $(T_2, T_{n-1})$ d'espacement $L_2$ relié à un générateur d'impulsions $(G_6)$ à la fréquence $F_2$, ces deux transducteurs étant alimentés en opposition de phase, $L_1$ et $L_2$ correspondant à un même nombre de longueurs d'onde à la fréquence d'utilisation et les voies préformées $(V_1, V_2, ..., V_q)$ correspondant aux directions des maximums d'émission pour ces deux fréquences ; l'antenne d'émission rayonnant simultanément à ces deux fréquences afin d'assurer en permanence une couverture angulaire complète du secteur d'émission.

4. Système d'antennes suivant l'une quelconque des revendications 1 à 3, caractérisé en ce que les transducteurs répartis $(T_1, T_2, ..., T_n)$ et les transducteurs d'extrémité $(T_1, T_n)$ appartiennent à une même rangée de transducteurs.


**Claims**

1. Antenna system for the detection of waves, especially sonar, at increased separating power, comprising a transmission antenna and a receiving antenna, said two antennas having each a length substantially equal to the value L, one being composed of transducers distributed along its length and the other being composed of at least two end transducers having an emission diagram, the lobes of which form a regular angular distribution, characterized in that the transmission antenna is the one which comprises the end transducers $(T_1, T_n)$, the receiving antenna is the one which comprises the distributed transducers $(T_1, T_2, ..., T_n)$, and the distributed transducers are connected by means of phase changers $(D_1, D_2, ..., D_n)$ with multiple tapping and cooperate with adder means $(S_1, S_2, ..., S_n)$ to constitue a unit of preformed detector lines $(V_1, V_2, ..., V_q)$, with the main lobes (R) of the preformed detector lines $(V_1, V_2, ..., V_q)$ covering one by one said emission lobes (E) so that the transmission-receiving unit has a comprehensive diagram (C) at reinforced separating power for each of said preformed lines.

2. Antenna system according to Claim 1, characterized in that the two transducers of the transmission antenna $(T_1, T_2)$ are supplied alternately in phase coincidence and in opposition to the phase, so that the emission lobes (E) form two periodic distributions in quadrature, assuring a complete angular covering of the transmission section.

3. Antenna system according to Claim 1, characterized in that the transmission antenna comprises a first pair of transducers $(T_1, T_2)$ at a distance $L_1$, connected to a pulse generator $(G_5)$ at a frequency $F_1$, with the two transducers being supplied, in phase, and a second pair of transducers $(T_2, T_{n-1})$ at a distance $L_2$, connected to a pulse generator $(G_6)$ at the frequency $F_2$, said two transducer means being supplied in opposition to the phase, with $L_1$ and $L_2$ corresponding to an equal number of wave lengths at the frequency of utilization, and with the preformed lines $(V_1, V_2, ..., V_q)$ corresponding to the directions of maximum emission for the two frequencies, the transmission antenna emitting at the same time at these two frequencies to assure a permanent, complete angular covering of the transmission section.

4. Antenna system according to any of the Claims 1 to 3, characterized in that the distributed transducers $(T_1, T_2, ..., T_n)$ and the end transducers $(T_1, T_n)$ belong to one and the same range of transducers.


**Ansprüche**

1. Antennensystem zum Finden von Wellen, insbesondere Sonar, mit vergrösserter Trennkraft, das

6

eine Sende- und eine Empfangsantenne enthält, wobei die genannten zwei Antennen eine Länge haben, die im wesentlichen dem Wert L gleicht, eine davon aus Energieumwandlern besteht, die entlang ihrer Länge verteilt sind und die andere ausmindestens zwei End-Energieumwandlern besteht mit einem Sendediagramm, dessen Keulen eine normal abgewinkelte Verteilung haben, dadurch gekennzeichnet, dass die Sende-antenne die jenige ist, welche die End-Energieumwandler ($T_1$, $T_n$) umfasst, die Empfangsantenne die jenige ist, welche die verteilten Energieumwandler ($T_1$, $T_2$, ..., $T_n$) umfasst, und die verteilten Energieumwandler durch Phasenschieber ($D_1$, $D_2$, ..., $D_n$) mit mehrfachem Abgriff verbunden sind und mit Addermitteln ($S_1$, $S_2$, ..., $S_n$) zusammenwirken, um eine Einheit von vorgeformten Gleichrichter Leitungen ($V_1$, $V_2$, ..., $V_q$) zu bilden, wobei die Hauptkeulen (R) der vorgeformten Gleichrichter-Leitungen ($V_1$, $V_2$, ..., $V_q$) eine nach der anderen der genannten Sendekeulen (E) überdecken, so dass die Sende- und Empfangseinheit ein allumfassendes Diagramm (C) mit vergrösserter Trennkraft für jede der vorgeformten Leitungen hat.

2. Antennensystem gemäss Anspruch 1, dadurch gekennzeichnet, dass die zwei Energieumwandler der Sendeantenne ($T_1$, $T_2$) abwechselnd in Phasengleichheit und entgegen der Phase gespeist werden, so dass die Sendekeulen (E) zwei periodische Verteilungen in Quadratur bilden, wodurch ein vollständig abgewinkeltes Abtasten des Sendebereichs erfolgt.

3. Antennensystem gemäss Anspruch 1, dadurch gekennzeichnet, dass die Sendeantenne ein erstes Paar von Energieumwandlern ($T_1$, $T_2$) mit einer Entfernung $L_1$ umfasst, die mit einem Impulsgeber ($G_5$), mit einer Frequenz $F_1$, verbunden sind, wobei die zwei Energieumwandler in Phase gespeist werden, und ein zweites Paar von Energieumwandlern ($T_2$, $T_{n-1}$) mit einer Entfernung $L_2$, die mit einem Impulsgeber ($G_6$) mit einer Frequenz $F_2$ verbunden sind, wobei die beiden Energieumwandler entgegen der Phase gespeist werden, $L_1$ sowie $L_2$ einer gleichen Anzahl von Wellenlängen mit der Gebrauchsfrequenz entsprechen und die vorgeformten Leitungen ($V_1$, $V_2$, ..., $V_q$) den Richtungen der maximalen Emission der beiden Frequenzen entsprechen ; die Sendeantenne zur gleichen Zeit in diesen beiden Frequenzen sendet, um ein dauerndes, vollständig abgewinkeltes Abtasten des Sendebereichs sicherzustellen.

4. Antennensystem gemäss einem der Ansprüche 1 bis 3, dadurch gekennzeichnet, dass die verteilten Energieumwandler ($T_1$, $T_2$, ..., $T_n$) und die End-Energieumwandler ($T_1$, $T_n$) zu ein und demselben Energieumwandler-Bereich gehören.

# Fig_1

(a)

(b) $0,88 \frac{\lambda}{L}$

(c) $0,88 \frac{\lambda}{L}$

$\sim A_1$

$\sqrt{A_2}$

$L$

# Fig_2

(a)

$A_3$

$L$

(b) $0,88 \frac{\lambda}{L}$

$A_2$

$L$

(c) $0,64 \frac{\lambda}{L}$

# Fig_3

(a)

$E$

$\theta$

$L$

$A4$

(b)

$R$

$0.88 \dfrac{\lambda}{L}$

$\theta$

$A_2$

$L$

(c)

$S$

$0.44 \dfrac{\lambda}{L}$

$\theta$

# Fig_4

(a)

$E$

$\theta$

$L$

$A5$

(b)

$R$

$0.88 \dfrac{\lambda}{L}$

$\theta$

$A_2$

$L$

(c)

$S$

$0.44 \dfrac{\lambda}{L}$

$\theta$

2

0 002 642

Fig_5

Fig_6

Fig_7

0 002 642

Fig_8

Fig_9